Europäisches Patentamt

European Patent Office

Office européen des brevets

(11) Veröffentlichungsnummer: **0 503 490 A2**

## EUROPÄISCHE PATENTANMELDUNG

(21) Anmeldenummer: **92103822.0**

(22) Anmeldetag: **06.03.92**

(51) Int. Cl.⁵: **G07C 1/30**

(30) Priorität: **08.03.91 DE 4107465**

(43) Veröffentlichungstag der Anmeldung:
**16.09.92 Patentblatt 92/38**

(84) Benannte Vertragsstaaten:
**AT BE CH DE DK ES FR GB GR IT LI NL PT SE**

(71) Anmelder: **ELZET ELEKTROTECHNIK GmbH**
**Parkhofstrasse 26**
**W-5142 Hückelhoven(DE)**

(72) Erfinder: **Zieher, Wolfgang**
**Parkhofstrasse 26**
**W-5142 Hückelhoven(DE)**

(74) Vertreter: **von Creytz, Dietrich, Dipl.-Phys.**
**Tannenweg 25**
**W-5144 Wegberg(DE)**

(54) **Parkscheibe für einen Kraftwagen.**

(57) Eine Parkscheibe für einen Kraftwagen stellt sich automatisch und manipulationssicher auf die aktuelle Ankunftszeit beim Abstellen des Fahrzeugs ein, wenn ihre Zeitskala mit einem durch eine Zeituhr gesteuerten Stelltrieb zum festen Einstellen des auf die Ankunftszeit folgenden Halbstundenstrichs durch ein Signal eines als Folge des Abstellens des Kraftwagens betätigten Sensors ausgestattet wird.

Fig.1

Die Erfindung betrifft eine Parkscheibe für einen Kraftwagen, die eine auf den der Ankunftszeit folgenden Halbstundenstrich relativ an einem Zeiger einzustellende Zeitskala und einen Stelltrieb mit zugeordneter Zeituhr besitzt, wobei zum Stelltrieb ein von einem Sensor betätigter Einschalter und ein durch Erreichen des jeweils gültigen Halbstundenstrichs aktivierter Ausschalter gehören.

Wenn im Bereich eines eingeschränkten Halteverbots (sogenanntes Parkverbot) die Benutzung einer Parkscheibe vorgeschrieben wird, so ist - nach einer Vereinbarung der Genfer Verkehrsministerkonferenz (CEMT, gültig seit 1. Mai 1989), z.B. in Deutschland nach § 13 (2) und Bild 291 StVO (Straßenverkehrsordnung) - das Halten bzw. Parken (nur) erlaubt, wenn der Kraftwagen eine von außen gut lesbare Parkscheibe hat und wenn der Zeiger der Parkscheibe auf den Strich der halben Stunde eingestellt ist, die dem Zeitpunkt des Abstellens folgt. Entsprechende Zonen, in denen das Abstellen eines Kraftwagens für eine gewisse Zeitdauer kostenlos erlaubt ist, wenn nur im Kraftwagen eine Parkscheibe - richtig, das heißt auf den gesetzlich vorgeschriebenen Halbstundenstrich, eingestellt - sichtbar ausliegt, sind relativ häufig anzutreffen. Die Parkerlaubnis kann man sich also selbst erteilen, wenn man das jedoch vergißt, kann die Folge ein Bußgeld sein.

Unter dem Begriff "Schalter", insbesondere "Ausschalter", wird im vorliegenden Zusammenhang irgendein Mittel zur Endpunkterkennung verstanden. "Zeituhr" ist irgendein Zeitgeber. Die "Zeitskala" kann insgesamt, wie herkömmlich, körperlich vorhanden sein oder aber zumindest teilweise, z.B. elektronisch, eventuell auch als LCD (liquid crystal display), abgebildet werden.

Bei einer aus DE 33 27 819 A1 bekannten Parkscheibe wird der Stelltrieb bzw. Skalenantrieb mit der Zeitskala mechanisch durch die Stundenachse eines Analoguhrwerks, welches ständig mitläuft, das heißt, eine Umdrehung in 12 Stunden macht, in Gang gehalten. Beim Abstellen des mit der Parkscheibe ausgestatteten Kraftwagens wird die Zeitskala von der Stundenachse des Uhrwerks abgekoppelt und mechanisch auf den der aktuellen Zeit folgenden Halbstundenstrich eingerastet. Diese bekannte Parkscheibe zeigt in ihrer Zeitskala bei Betrieb des Kraftwagens ständig die aktuelle Zeit an. Die Zeitskala und die Zeituhr werden außer während der Zeit des Abstellens des Kraftwagens permanent mechanisch kraftschlüssig über eine Elektromagnet-Kupplung miteinander gekuppelt. Wenn man also dafür sorgt, daß die eingebaute Magnetkupplung auch beim Abstellen des Kraftwagens ständig mit Strom versorgt wird, - es genügt hierzu einfach ein Anschluß an die Stromversorgung der Zeituhr - bewegt sich die Zeitskala auch bei abgestelltem Kraftwagen der aktuellen Zeit folgend weiter. Eine solche Parkscheibe entspricht nicht den gesetzlichen Vorschriften, sie ist daher nicht zulässig.

Weiterhin werden in DE-GM 90 03 908.4 und DE 36 18 097 C2 herkömmliche Digitaluhren beschrieben, welche beim Abstellen des Kraftwagens stehen bleiben, also den Zeitpunkt des Abstellens anzeigen. Derartige Parkuhren sind keine Parkscheiben im gesetzlichen Sinne, denn die gesetzlichen Vorschriften verlangen eine Zeitskala und die Möglichkeit der Einstellung auf den Halbstundenstrich, welcher dem Anhalten des Kraftwagens folgt.

Der Erfindung liegt die Aufgabe zugrunde, eine gesetzlich zulässige Parkscheibe zu schaffen, die sich beim Abstellen des Kraftwagens selbsttätig den gesetzlichen Bestimmungen entsprechend einstellt und die durch den Benutzer, z.B. im Sinne eines Weiterlaufens bei abgestelltem Kraftwagen, nicht manipulierbar ist, sowie deren einmal eingestellte Ankunftszeit, wie bei einer von Hand zu betätigenden Parkscheibe, gegebenenfalls bis zum nächsten Abstellen des Kraftwagens stehenbleibt

Die erfindungsgemäße Lösung ist für die Parkscheibe eingangs genannter Art gekennzeichnet durch einen nur durch Abstellen des Kraftwagens zu aktivierenden Sensor mit Stelltrieb zum bis zum nächsten Abstellen des Kraftwagens festen Einstellen der Zeitskala auf den der aktuellen Uhrzeit folgenden Halbstundenstrich, durch Mittel zum Abfragen der ursprünglichen Anzeige der Zeitskala und durch eine Kopplung des Zeitskala-Stelltriebs mit einer als Sollwertgeber der aktuellen Zeit ausgebildeten Zeituhr. Verbesserungen und weitere Ausgestaltungen der Erfindung werden in den Unteransprüchen angegeben.

Erfindungsgemäß wird ein Sensor vorgesehen, der nur durch Abstellen des Kraftwagens zu aktivieren ist. Daher wird die Zeitskala nur beim Abstellen des Kraftwagens durch den Stelltrieb verändert. Die dann fixierte Zeitanzeige bleibt mindestens bis zur nächsten Inbetriebnahme bestehen, um im allgemeinen beim nächsten Abstellen des Kraftwagens die abzufragende ursprüngliche Anzeige zu bilden. Wesentlich ist also daß die erfindungsgemäße Parkscheibe immer genau beim Abstellen des Kraftwagens -ann und nur dann - ausgehend von der ursprünglichen Anzeige automatisch entsprechend der aktuellen Ankunftszeit fest eingestellt wird.

Die beim Abstellen des Kraftwagens aktuelle Anzeige der Zeitskala kann vorzugsweise durch Kontakt, berührungslos oder elektronisch, z.B. bei elektrischer Speicherung der letzten Einstellung der Zeitskala, abgefragt werden. Durch eine Kopplung der Zeitskala mit einer externen oder im Gehäuse der Parkscheibe eingebauten Zeituhr, insbesondere mit der Borduhr des Kraftwagens, gegebenenfalls

2

über einen im Kraftwagen vorhandenen Bordcomputer ist für den Stelltrieb stets die aktuelle Zeit als Sollwert verfügbar. Schließlich erfolgt das Einstellen der Ankunftszeit erfindungsgemäß nur so weit und so lange, bis der im Einzelfall gültige Halbstundenstrich erreicht ist. Je nach Konstruktionstyp soll der Sensor einen Einschalter für den Stelltrieb betätigen, und durch Erreichen des jeweils gültigen Halbstundenstrichs soll ein Ausschalter aktiviert werden, der den Stelltrieb wieder abschaltet. Vorzugsweise werden die Steuer- und Regelteile des Stelltriebs in einem Mikrochip vereinigt. Die Gesamtkonstruktion der erfindungsgemäßen Parkscheibe macht insbesondere dann eine Manipulation der Parkscheibe durch den Benutzer, z.B. zwecks ständigen Mitlaufens der Parkscheibe mit der Uhrzeit, praktisch unmöglich.

Erfindungsgemäß ist die vor dem jeweiligen Abstellen des Kraftwagens von dem vorhergehenden Abstellen des Kraftwagens noch vorhandene ursprüngliche Anzeige der Zeitskala Ausgangspunkt des Nachstellens auf die beim neuen Abstellen des Kraftwagens einzustellende Parkzeit. Anders als bei der Parkscheibe nach der oben genannten DE 33 27 819 A1, die eine außer beim Abstellen des Kraftwagens ständig mitlaufende Zeitskala besitzt und hierzu ein der Parkscheibe unmittelbar zugeordnetes Analoguhrwerk unbedingt erfordert, genügt es erfindungsgemäß, irgendeine Uhr als Zeitgeber ausschließlich für die Zeit des Einstellens der Zeitskala auf die aktuelle Parkzeit vorzusehen bzw. abzufragen. - Anstelle der rein mechanischen Ausbildung bekannter Parkscheiben kann erfindungsgemäß eine rein elektronische Steuerung vorgesehen werden. Allerdings für den ausschließlich beim Abstellen des Kraftwagens in Aktion befindlichen Stelltrieb kann auch bei elektronischer Steuerung ein Elektromotor, bevorzugt ein Schrittmotor, eingesetzt werden.

Vorzugsweise wird als den Stelltrieb auslösendes Signal der durch das Abschalten der Zündung des Kraftwagens erzeugte Spannungsabfall vorgesehen. Erfindungsgemäßer Sensor ist dann also gewissermaßen das Zündschloß. Nur durch Spannungsabfall - also nicht durch Spannungsanstieg - an der Zündklemme des Bordnetzes des Kraftwagens soll also der erfindungsgemäße Stellvorgang der Parkscheibe auslösbar sein. Anstelle des durch Abschalten der Zündung erzeugten Signals kann für den Stellvorgang auch ein von einem Türkontakt - der Innenbeleuchtung entgegengesetzt - oder ein von noch anderen - vorzugsweise auf Gewicht oder Bewegung bzw. Erschütterung reagierende - Sensoren geliefertes Signal für den Stelltrieb herangezogen werden.

Bevorzugt wird eine gekapselte bzw. versiegelte Elektronik-Steuerung, insbesondere als Mikrochip, für den Stelltrieb vorgesehen. Günstig wird auch die den Ausgangspunkt bzw. die Ausgangsposition des Stelltriebs bildende letzte Einstellung der Zeitskala elektrisch oder elektronisch gespeichert. Gegebenenfalls kann ein im Kraftwagen vorhandener Bordcomputer unmittelbar oder über eine Datenbus-Leitung zur teilweisen oder vollständigen Steuerung der Funktionen der erfindungsgemäßen Parkscheibe, insbesondere als Sollwertgeber der aktuellen Zeit, herangezogen werden.

Die erfindungsgemäße Parkscheibe kann vorzugsweise wie üblich angrenzend an die Frontscheibe oder deren Bereich plaziert werden. Hierbei kann es vorteilhaft sein, die Parkscheibe versenkbar oder aus dem Sichtbereich herausklappbar auf einem Betätigungsmittel zu befestigen, das die Parkscheibe beim Aktivieren infolge des Abstellens des Kraftwagens in den Sichtbereich schwenkt bzw. aus einer, z.B. im Armaturenbrett, versenkten Position herausschiebt. Gegebenenfalls können die für den Stellvorgang erforderlichen Leitungen direkt von dem Bereich der Frontscheibe nach unten in das Armaturenbrett führen. Als Istwertgeber liegt alternativ auch eine berührungslose Signalübertragung zu der Parkscheibe im Bereich der Erfindung.

Die Zeitskala der erfindungsgemäßen Parkscheibe und diese selbst können wie üblich aus Pappe, Kunststoff oder Metall bestehen. Bei derartig ausgebildeter Zeitskala wird ein elektrischer oder elektromechanischer Stelltrieb bevorzugt. Alternativ kann die Zeitskala, vorzugsweise deren sichtbarer Sektor, aber auch elektronisch ausgebildet werden. In diesem Fall soll als Stelltrieb vorzugsweise eine entsprechende elektronische Steuerung vorgesehen werden.

Zur Erfindung gehört aber auch eine Parkscheibe, in der der Geber der aktuellen Uhrzeit, der durch das Halten des Kraftwagens aktivierte Sensor, die zum Schalten, Tasten und/oder Stellen erforderliche Elektronik und eine Energiequelle, z.B. Batterie und/oder Solarzelle, integriert sind. Eine solche Parkscheibe erfordert keinerlei Anschlüsse an das Bordsystem und kann.- wie bisher gewohnt - einfach in den Kraftwagen gelegt oder an der Windschutzscheibe (innen) befestigt werden. Zum Aktivieren des Stellvorgangs wird in diesem Fall vorzugsweise ein Bewegungssensor verwendet, der den jeweiligen Stellbefehl gibt, wenn er keine Erschütterungen, z.B. vom Motor her, mehr fühlt. Gegebenenfalls wird zweckmäßig eine Zeitverzögerung vorgesehen, damit die Parkscheibe nicht unnötig bei verkehrsbedingtem Halten, z.B. im Stau, schaltet.

Die erfindungsgemäße Parkscheibe ist manipulationssicher, sie kann durch die Borduhr (Analog- oder elektronische Digitaluhr) gesteuert werden, sie benötigt zur Funktion keine eingebaute Uhr, vielmehr genügt eine einfache Datenübertragung zum Zeitpunkt des Abstellens des Kraftwagens. Die erfindungsgemäße Parkscheibe besitzt selbst bei elektronischer Ausbildung - im sichtbaren Sektor - eine den gesetzlichen Vorschriften entsprechende Zeitskala und nicht nur eine bei elektronischen Uhren übliche Ziffernanzeige. Die erfindungsgemäß vorgesehene Zeitskala kann im einen Extremfall mechanisch angetrieben und im anderen Extremfall als elektronische/elektrische Skala ausgelegt sein. Sie gewährleistet das vorgeschriebene "Aufrunden" auf den dem Abstellen des Kraftwagens folgenden Halbstundenstrich und besitzt auch bei vollelektronischem Betrieb, selbst bei LCD-Anzeige, das nach den gesetzlichen Bestimmungen geforderte Erscheinungsbild.

Ein weiterer Vorteil der erfindungsgemäßen Parkscheibe besteht darin, daß ihre Funktionen ebenso wie fast alle anderen Funktionen des Kraftwagens über einen Bordcomputer zu steuern sind. Gegebenenfalls werden keine Kabelbäume mehr eingesetzt, sondern nur noch eine 2-polige serielle Ringleitung, der sogenannte Datenbus, und eine Stromleitung.

Als mechanischer bzw. elektromechanischer Stelltrieb der Zeitskala der erfindungsgemäßen Parkscheibe wird vorzugsweise ein Schrittmotor vorgesehen, der es erlaubt, den der Ankunftszeit des Kraftwagens entsprechenden Halbstundenstrich exakt bzw. digital einzustellen. Ein solcher Motor soll aus Platzgründen und/oder wegen der Handhabbarkeit der Parkscheibe möglichst flach ausgebildet werden. Das läßt sich gemäß weiterer Erfindung erreichen, wenn der Schrittmotor mit einem radial zwischen zwei Stator-Polkränzen frei drehbaren Ringrotor, der innen und außen Permanentmagnet-Pole besitzt, ausgestattet wird. Ein solcher Motor funktioniert wie übliche Schrittmotoren, die zwei einem Stator-Polkranz auf einer gemeinsamen Achse zugeordnete Ringrotoren aufweisen. Durch die gemäß weiterer Erfindung vorgesehene koaxiale Anordnung der Funktionselemente und die Verwendung eines einzigen Ringrotors, wird erreicht, daß die Bauhöhe des Motors um die axiale Stärke eines Ringrotors sinkt und zugleich der Herstellungsaufwand vermindert wird.

Anhand der schematischen Zeichnung eines Ausführungsbeispiels werden Einzelheiten der Erfindung erläutert. Es zeigen:

Fig. 1     die Vorderansicht einer Parkscheibe;

Fig. 2     eine Seitenansicht einer Parkscheibe mit auf deren Rückseite vorgesehenem Skalenantrieb;

Fig. 3 bis 5     ein elektrisches/elektronisches Display einer Parkscheibe; und

Fig. 6     das Sprengbild eines als mechnischer Stelltrieb günstigen, weil flachen, Schrittmotors.

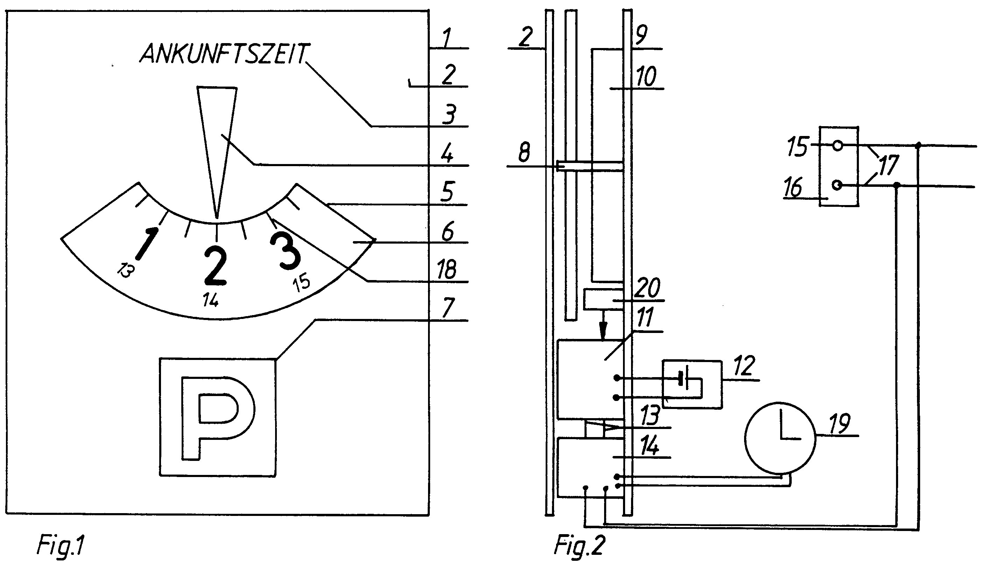

Die in Fig. 1 dargestellte Parkscheibe 1 besitzt eine gesetzlich vorgeschriebene Form. Die Fläche 2 der Scheibe ist blau. Innerhalb der blauen Fläche 2 befinden sich

a) - normalerweise in weiß - das insgesamt mit 3 bezeichnete Wort "Ankunftszeit",

b) der Pfeil 4,

c) in einer als Teil eines Kreisrings ausgebildeten Ausnehmung 5 der blauen Fläche 2 eine Zeitskala 6, und

d) unterhalb der Ausnehmung 5 ein in weißer Schrift mit weißer Umrandung dargestelltes Parkzeichen 7. Die blaue Fläche 2 soll eine Größe von 11 cm (Breite) x 13 cm (Höhe) besitzen.

Die Zeitskala 6 ist nach Fig. 1 und 2 um eine Achse 8 drehbar in der Fläche 2 bzw. in einer dahinter angeordneten Rückwand 9 drehbar gelagert. Auf die Achse 8 wird ein z.B. als Motor ausgebildeter Skalenantrieb bzw. Stelltrieb 10 geschaltet. Dieser Stelltrieb 10 kann durch ein elektrisches Signal über ein mit dem Antrieb 10 gekoppeltes Steuerteil 11 - z.B. mit zugehöriger Energiequelle 12 - drahtlos oder über die gezeichneten Leitungen 13 gesteuert werden. Die Leitungen 13, z.B. auch Datenbus, führen im Ausführungsbeispiel zu einem Eingangsbaustein 14, z.B. auch Bordcomputer, der mit der an einer Klemme 15 im Zündschloß 16 des jeweiligen Kraftwagens angeschlossenen Leitung 17 derart gekoppelt ist, daß der Eingangsbaustein 14 nur beim Öffnen des Zündschlosses 16 - also bei Spannungsabfall an der zugehörigen Klemme 15 - nicht aber beim Spannungsanstieg an der Klemme 15, also beim Schließen des Zündschlosses 16 ein Signal auswertet. Im Ausführungsbeispiel stellt also das Zündschloß 16 zumindest einen Teil des erfindungsgemäßen, (nur) durch das Abstellen des Kraftwagens aktivierten Sensors dar. - Der Eingangsbaustein 14 kann auch (räumlich) einer Zeituhr, z.B. Borduhr des Fahrzeugs, zugeordnet sein.

Wenn der Stelltrieb 10 über das Steuerteil 11 mit einem Signal beaufschlagt wird, soll er die Zeitskala auf den nächsten der Ankunftszeit folgenden Halbstundenstrich 18 einstellen. Hierzu kann dem Eingangsbaustein 14 eine Zeituhr 19 als Sollwertgeber zugeordnet werden. Das Einschalten des Stelltriebs 10 kann also durch den Spannungsabfall an der Klemme 15 bewirkt werden. Der Stelltrieb 10 folgt dann dem Befehl der Zeituhr 19, er kann allerdings (fast) eine halbe Stunde weiterlaufen bzw. weiterstellen, als die Zeituhr 19 anzeigt. Das Abschalten erfolgt also durch einen UND-Befehl: Erreichen der aktuellen Zeit und des darauffolgenden Halbstundenstrichs 18. Beispielsweise kann der jeweilige Halbstundenstrich 18 zur Kontaktgabe - mit oder ohne Berührung - herangezogen werden. Hierzu kann ein mit dem Steuerteil 11 oder dem Eingangsbaustein 14 verbundener Fühler 20 vorgesehen werden, der vorzugsweise in der Parkscheibe bzw. innerhalb von deren im wesentlichen durch die Platten 2 und 9 gebildeten Gehäuse angrenzend an die Zeitskala 6 zu positionieren ist. Die vorstehende Erläuterung dient lediglich dem Verständnis einiger Funktionen. In der Praxis können viele oder die meisten Funktionen in einem einzigen Mikrochip vereinigt werden.

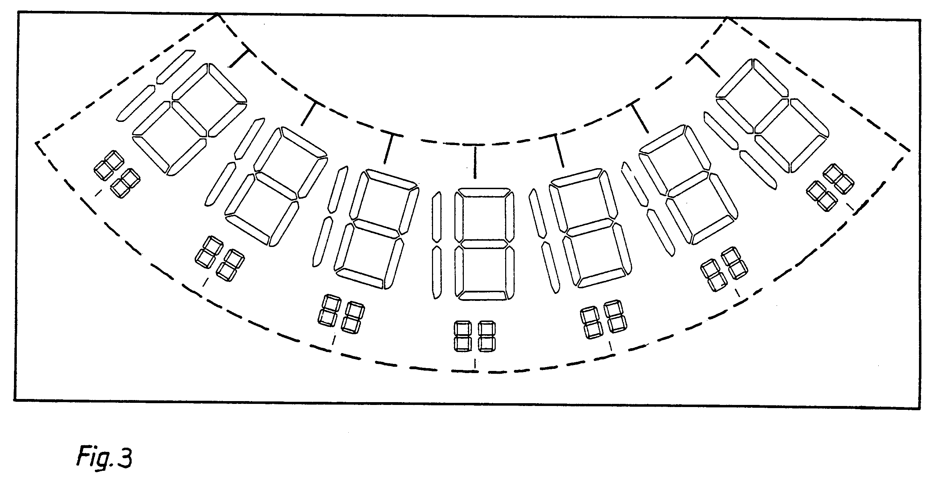

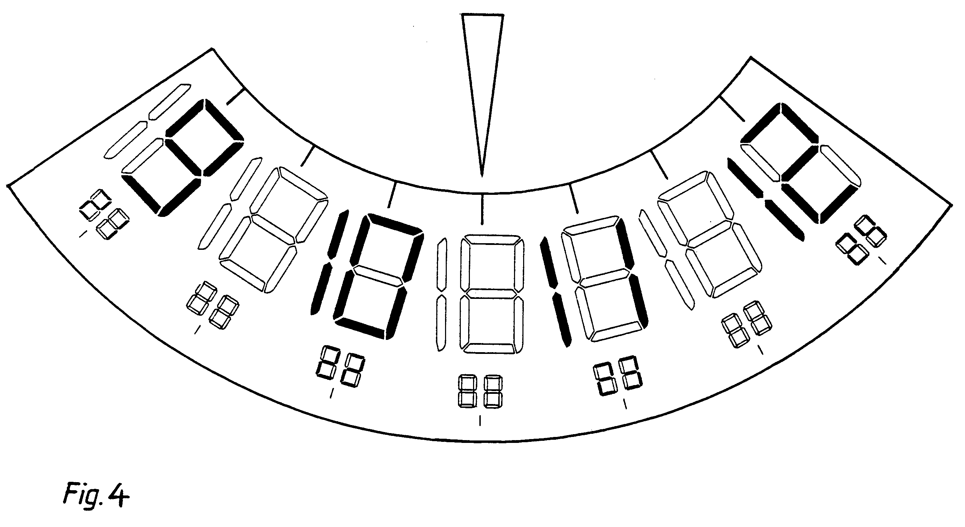

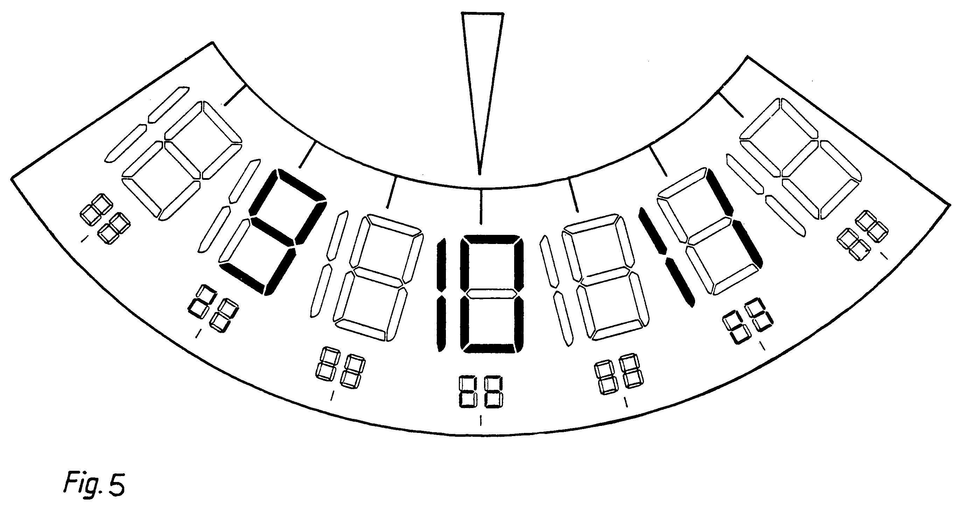

Fig. 3 zeigt ein elektrisches/elektronisches Display für die Parkscheibe. Über den Ziffern (in der Zeichnung als Umrisse dargestellt, im nicht angesteuerten Zustand unsichtbar) befinden sich die immer sichtbaren Halbstundenstriche. Das gestrichelt dargestellte Ringsegment wird im Sichtfenster der Parkscheibe abgebildet. Fig. 4 stellt die Anzeige dar, die beim Abstellen des Kraftwagens in der Zeit von 10.01 (22.01) Uhr bis 10.30 (22.30) Uhr mindestens bis zur nächsten Inbetriebnahme des Fahrzeugs abgebildet wird. Die nur im Umriß dargestellten Ziffernelemente sind nicht sichbar, da nicht angesteuert. Fig. 5 zeigt zum Vergleich das Bild, das sich beim Abstellen des Kraftwagens in der Zeit von 09.31 (21.31) Uhr bis 10.00 (22.00) Uhr ergibt. Bei Einsatz der elektronischen Skala nach Fig. 3 wird das Steuerteil 11 im allgemeinen abweichend von Fig. 2 ausgelegt. Es können dann Motor 10, Achse 1 und Skala 6, in die elektrische Skala von Fig. 3 integriert gedacht werden.

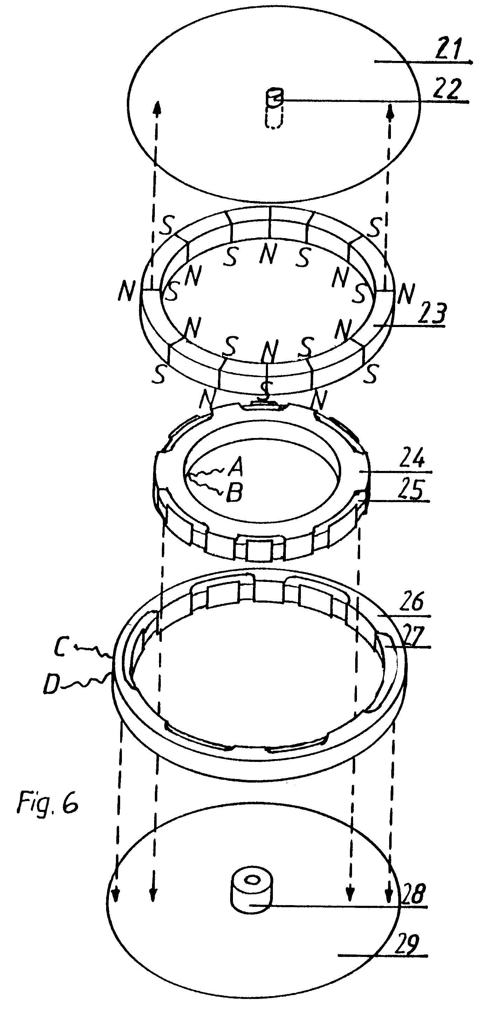

Fig. 6 zeigt ein Ausführungsbeispiel eines als Stelltrieb der erfindungsgemäßen Parkscheibe bevorzugten Schrittmotors besonders flacher Bauart als perspektivisches Sprengbild. Wesentliche Bauteile dieses Schrittmotors sind ein Rotorträger 21 mit Achse 22 und daran befestigtem, Permanentmagnetpole N/S tragendem Ringrotor 23, ein innerer Stator-Polkranz 24 mit Erregerspule(n) 25, ein äußerer Stator-Polkranz 26 mit Erregerspule(n) 27 und eine ein Lager 28 für die Achse 22 aufweisende Stator-Grundplatte 29.

Die einzelnen Elemente des Schrittmotors nach Fig. 6 werden so angeordnet, daß der Ringrotor 23 radial zwischen den Stator-Polkränzen 24 und 26 frei drehbar bleibt. Wichtig ist die koaxiale Anordnung dieser Funktionselemente 23, 24 und 26, die es erlaubt, einen einzigen Ringrotor 23 zu verwenden, so daß die Bauhöhe des Schrittmotors im wesentlichen auf die axiale Stärke der Rotor/Stator-Anordnung beschränkt wird.

Der zwischen den Stator-Polkränzen 24, 26 frei drehbar - um die im Lager 28 sitzende Achse 22 - gelagerte Ringrotor 23 trägt innen und außen die erforderlichen Magnetpole. Radial außerhalb und innerhalb des Ringrotors 23 befindet sich je ein Stator-Polkranz 24, 26. Durch elektrische Erregung der zugehörigen Spulen 25, 27 - über die Anschlüsse A, B bzw. C, D - dieser beiden Polkranze 24, 26 erfolgt die schrittweise Drehung in der gewünschten Motor-Drehrichtung. Der zur Funktion des Schrittmotors erforderliche Versatz der Magnetpole kann durch entsprechende Magnetisierung des Ringrotors 23 oder durch eine winkelversetzte Anordnung der beiden Stator-Polkranze 24, 26 erreicht werden. Der Schrittmotor läßt sich mit Hilfe bekannter Digitalsteuerungen betreiben.

Die Anzahl der Schritte, die zu einer vollen Umdrehung des Motors benötigt werden, ist voll der Anzahl der Magnetpolpaare des Ringrotors 23 und der dazu korrespondierenden Pole der Stator-Polkränze 24, 26 abhängig. Fig. 6 zeigt einen Ringrotor 23 mit innen und außen je sechs Polpaaren; unter dieser Voraussetzung sind für eine Umdrehung des Rotors vierundzwanzig Vollschritte oder achtundvierzig Halbschritte erforderlich. Im übrigen funktioniert der Motor nach Fig. 6 wie jeder andere Schrittmotor.

Im speziellen Anwendungsfall nach Fig. 2 nimmt der Schrittmotor voll Fig. 6 die Position des Stelltriebs 10 ein.

**Patentansprüche**

1. Parkscheibe (1) für einen Kraftwagen, welche eine auf den der Ankunftszeit folgenden Halbstundenstrich (18) an einem Zeiger (4) einzustellende Zeitskala (6) und einen Stelltrieb (10) mit zugeordneter Zeituhr (19) besitzt, wobei zum Stelltrieb (10) ein von einem Sensor (16) betätigter Einschalter gehört,
   **gekennzeichnet durch**
   einen nur durch Abstellen des Kraftwagens zu aktivierenden Sensor (16) mit Stelltrieb (10) zum bis zum nächsten Abstellen des Kraftwagens festen Einstellen der Zeitskala (6) auf den der aktuellen Uhrzeit folgenden Halbstundenstrich (18), durch Mittel zum Abfragen der aktuellen Anzeige der Zeitskala (6) und durch eine Kopplung der Zeitskala (6) mit einer als Sollwertgeber der aktuellen Zeit ausgebildeten Zeituhr (19).

2. Parkscheibe nach Anspruch 1,
   **dadurch gekennzeichnet,**
   daß ein durch den beim Abschalten des Zündschlosses des Kraftwagens erzeugten Spannungsabfall, von einem durch einen Türkontakt beim Schließen oder Abschließen einer Tür erzeugten Signal oder durch Ruhe im Anschluß an eine Erschütterung, insbesondere nach Abschalten des Motors, aktivierter Sensor zum Auslösen des Stelltriebs (10) vorgesehen ist.

3. Parkscheibe nach Anspruch 1 oder 2,
   **dadurch gekennzeichnet,**
   daß eine gekapselte bzw. versiegelte Elektronik-Steuerung, insbesondere ein Mikrochip, für den Stelltrieb (10) vorgesehen ist.

4. Parkscheibe nach mindestens einem der Ansprüche 1 bis 3,
**dadurch gekennzeichnet,**
daß als Sollwertgeber für die aktuelle Zeit die im Kraftwagen vorhandene, entsprechend vorbereitete Borduhr vorgesehen ist.

5. Parkscheibe nach mindestens einem der Ansprüche 1 bis 4,
**dadurch gekennzeichnet,**
daß der Stelltrieb (10) als Schrittmotor - insbesondere koaxialer Bauart, mit einem einzigen, radial zwischen zwei Stator-Polkränzen (24, 26) frei drehbar gelagerten, außen und innen Permanentmagnetpole besitzenden Ringrotor (23) - ausgebildet ist.

6. Parkscheibe nach mindestens einem der Ansprüche 1 bis 5,
**gekennzeichnet durch**
eine elektrische Speicherung der letzten Einstellung der Zeitskala (6).

7. Parkscheibe nach mindestens einem der Ansprüche 1 bis 6,
**gekennzeichnet durch**
eine elektronische Zeitskala (6; Fig. 3).

8. Parkscheibe nach mindestens einem der Ansprüche 1 bis 7,
**gekennzeichnet durch**
die Verwendung eines im Kraftwagen vorhandenen Bordcomputers unmittelbar oder über eine Datenbus-Leitung zur zumindest teilweisen Steuerung der Funktionen, insbesondere als Sollwertgeber der aktuellen Zeit.

9. Parkscheibe nach mindestens einem der Ansprüche 1 bis 8,
**gekennzeichnet durch**
ein unter der Frontscheibe im Armaturenbrett bei Betrieb des Kraftwagens versenkbares und beim Einschalten in den Sichtbereich herausfahrbares Gehäuse.

10. Parkscheibe nach mindestens einem der Ansprüche 1 bis 9,
**gekennzeichnet durch**
eine nur zum Zeitpunkt des Stellvorgangs aktivierte Datenübertragung vom Sensor zum Stelltrieb.

Fig.1

Fig.2

ANKUNFTSZEIT

Fig.3

Fig. 4

Fig. 5

21

22

S S S
S N S
N N N
N S N S
N S
S N S
N S N S
N S N S
S N S
N S N

23

24

A

B

25

26

27

C

D

Fig. 6

28

29